# DEMANDE DE BREVET EUROPEEN

(11) **EP 4 765 081 A1**
(43) Date de publication de la demande: **24.06.2026**
(21) Numéro de dépôt: 25224266.4
(22) Date de dépôt: 17.12.2025
(51) Int. Cl.: G09F 13/04, B60Q 3/14, B60Q 3/54, G09F 13/06, B60K 35/10

(54) **DALLE PLASTRONIQUE ET SON PROCÉDÉ D'ASSEMBLAGE**

(30) Priorité: 17.12.2024 FR 2414362
(71) Demandeur: Commissariat à l'Energie Atomique et aux Energies Alternatives, 75015 Paris (FR)
(72) Inventeur: DUCROS, Cédric, 38054 Grenoble Cedex 09 (FR); PEREIRA, Alexandre, 38054 Grenoble Cedex 09 (FR)
(74) Mandataire: Hautier IP

(57) **Abrégé**

L'invention concerne une dalle plastronique (1) comprenant une feuille de décor (10), présentant une face interne (11), la feuille de décor (10) comprenant au moins une première région ouverte (131), une feuille technique (20) présentant une face interne (21) et comprenant au moins une première source lumineuse (221), la dalle plastronique étant caractérisée en ce que sur au moins sur une première portion (1a) de la dalle, la face interne de la feuille de décor est en contact et assemblée avec la face interne de la feuille technique et en ce que sur au moins une deuxième portion (1b) de la dalle, la dalle plastronique présente au moins une cavité (30), l'au moins une cavité s'étendant entre la première source lumineuse et la première région ouverte de la feuille de décor.

## Description

### DOMAINE TECHNIQUE

La présente invention concerne le domaine de la plastronique. Le domaine de la plastronique permet l'intégration de circuits imprimés dans une forme particulière, comme par exemple un appareil domotique ou une interface d'intérieur automobile. L'invention concerne tout particulièrement les dalles plastroniques comprenant des pictogrammes rétroéclairés.

### ETAT DE LA TECHNIQUE

Les dalles plastroniques rétroéclairées sont de plus en plus présentes dans diverses industries, notamment l'industrie automobile.

Les dalles plastroniques rétroéclairées sont typiquement constituées :
- d'un film technique avec des pistes électroniques, des composants électroniques, des composants optiques ainsi que des encres de gestion optique. Les encres de gestion optique sont déposées sur le film technique afin de gérer des réflexions ou absorption des rayons lumineux générés par les composants optiques ;
- d'un film décor ou film d'aspect, placé en surface de la dalle afin d'assurer l'esthétique de la dalle et de lui conférer une fonction optique pour la gestion des commandes du tableau de bord, notamment par l'intermédiaire de pictogrammes rétroéclairés ;
- d'un matériau polymère injecté entre les films technique et décor afin de constituer l'objet en étant lié au film technique et au film décor, et de transmettre les rayons lumineux préférentiellement des composants optiques du film technique vers les pictogrammes imprimés sur les films décor.

Ces dalles de type connu sont largement employées. Leur performance est jugée notamment au regard de leur efficacité optique de rétroéclairage, qui peut être caractérisée par plusieurs grandeurs optiques, notamment :
- la luminance d'un pictogramme (en cd/m²) pour une puissance électrique (W) délivrée par les composants optiques. Cette caractéristique est couramment désignée « rendement optique ».
- la pollution lumineuse induite par un pictogramme sur ses premiers voisins. Cette caractéristique est également parfois nommée « pollution croisée ».
- l'homogénéité d'éclairage sur un pictogramme.

L'invention vise à améliorer les dalles existantes, en particulier au regard d'autres critères de performance : simplicité de conception et de fabrication, prix de revient, et minimisation de l'impact sur l'environnement.

En effet, les dalles plastroniques actuelles présentent l'inconvénient d'un indice de réparabilité faible. L'accès, la réparation ou le remplacement des composants de la dalle, par exemple de ses composants électroniques, est généralement problématique voire impossible. Ainsi un défaut d'un composant, pouvant entrainer une diminution par exemple de l'éclairage, entraine couramment la mise au rebut de la dalle plastronique.

Un objet de la présente invention est de proposer une solution afin d'éviter ou au moins limiter ces inconvénients.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit une dalle plastronique comprenant :
- une feuille de décor, présentant une face interne et une face externe, la feuille de décor comprenant une couche obturatrice présentant au moins une première région ouverte constituant un premier pictogramme et configurée pour laisser passer au moins un premier faisceau lumineux,
- une feuille technique, présentant une face interne en regard de la face interne de la feuille de décor et en outre présentant une face externe, la feuille technique comprenant au moins une première source lumineuse, l'au moins une première source lumineuse étant configurée pour émettre, selon une direction d'émission, l'au moins un premier faisceau lumineux à destination de ladite première région ouverte de la feuille de décor,

la feuille de décor et la feuille technique étant formées et assemblées entre elles par thermoformage,
la dalle plastronique étant caractérisée en ce que sur au moins sur une première portion de la dalle, la face interne de la feuille de décor est en contact et assemblée avec la face interne de la feuille technique et en ce que sur au moins une deuxième portion de la dalle, la dalle plastronique présente au moins une cavité, l'au moins une cavité s'étendant entre la première source lumineuse, l'au moins une première source lumineuse étant positionnée sur la face externe de la feuille technique, et la première région ouverte de la feuille de décor, et la première région ouverte de la feuille de décor.

Ainsi, l'invention permet de trouver une solution réduisant le coût d'une dalle plastronique. En effet la réduction de quantité de matière utilisée en supprimant la couche de résine injectée permet de limiter le coût de production d'une dalle plastronique. Cette suppression de résine permet additionnellement de simplifier la production de la dalle plastronique. Elle nécessite l'intervention de moins de corps de métier. Un autre bénéfice est que l'invention permet également d'améliorer son indice de réparabilité. En effet les composants électroniques ne sont plus noyés dans la résine et peuvent donc être remplacés si besoin. De plus, des composants peuvent être réutilisés sur une autre dalle si ceux-ci sont encore en état de fonctionnement contrairement aux dalles plastroniques connues. L'invention permet ainsi de répondre aux problèmes de l'art antérieur, sans pour autant diminuer la qualité de la luminance des pictogrammes.

Selon un autre aspect, on prévoit un procédé d'assemblage d'une dalle plastronique telle que décrite précédemment dans lequel le procédé comprend :
- une élaboration de la feuille de décor, l'élaboration comprenant :
   ∘ une sérigraphie d'au moins une encre décor sur la feuille de décor,
   ∘ un thermoformage de la feuille de décor,
   ∘ un découpage de la feuille de décor aux dimensions de la dalle plastronique,
- une élaboration de la feuille technique, l'élaboration comprenant :
   ∘ une sérigraphique de pistes électroniques sur la face externe de la feuille technique,
   ∘ un report de composants sur la face externe de la feuille technique,
   ∘ un thermoformage de la feuille technique,
   ∘ un découpage de la feuille technique aux dimensions de la dalle plastronique,
le procédé comprenant en outre les étapes suivantes :
- un assemblage de la feuille de décor et de la feuille technique,
- une mise en place de connectique.

Ainsi le procédé d'assemblage d'une dalle plastronique est simplifié et permet une production optimisée. Les dalles plastroniques sont ainsi plus simples à fabriquer et donc la production de celle-ci est accélérée. De plus le procédé de fabrication permet de positionner et avantageusement d'enlever si nécessaire des composants non fonctionnels ou présentant un défaut. L'indice de réparabilité de la dalle est donc amélioré.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue schématique en coupe d'une dalle plastronique selon l'invention.
La figure 2 représente une vue éclatée d'une dalle plastronique selon un mode de réalisation de l'invention.
La figure 3 représente une vue agrandie d'une cavité présente dans une dalle plastronique selon l'invention.
La figure 4 représente une vue schématique en coupe d'une dalle plastronique l'invention.
La figure 5 représente les étapes du procédé d'assemblage d'une dalle plastronique selon l'invention.
Les figures 6A et 6B représentent des vues en coupe de la périphérie de dalles plastroniques selon l'invention positionnées dans une coque de protection, selon deux modes de réalisation de l'invention.
La figure 7 représente les étapes du procédé de maintenance d'une dalle plastronique selon l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le volume de l'au moins une cavité est remplie par un gaz, de préférence le gaz est de l'air. Cela permet de simplifier la production de la dalle plastronique tout en limitant son coût par le fait de ne pas utiliser de résine.

Selon un exemple, le volume de l'au moins une cavité est remplie par un polymère. Cela permet ainsi d'éviter les sauts d'indices et donc d'améliorer la transmission du faisceau lumineux tout en limitant le coût de production de la dalle.

Selon un exemple, l'au moins une première source lumineuse est positionnée dans une région ouverte de la feuille technique. Cela permet ainsi un accès facile à la source lumineuse facilitant et par suite réduire le coût d'une dalle plastronique.

Selon un exemple, l'au moins une cavité présente une forme conique ou parabolique dont la région de sommet et les parois sont formées par au moins une partie de la face interne de la feuille technique et dont la base est formée au moins en partie par la face interne de la feuille de décor. Cela permet une diffusion optimale de la lumière tout en gardant un coût limité.

Selon un exemple, l'au moins une première source lumineuse est positionnée de sorte à émettre au moins un premier faisceau lumineux à partir de la région de sommet de l'au moins une cavité. Cela permet une diffusion optimale de la lumière tout en simplifiant la production de la dalle plastronique. En effet l'emplacement de la source lumineuse simplifie sa production.

Selon un exemple, la dalle plastronique comprend des composants électroniques et une connectique, les composants électroniques et la connectique étant positionnés sur la face externe de la feuille technique. Cela permet un accès facile aux composants en cas de défaillance permettant par suite un meilleur indice de réparabilité de la dalle plastronique. De plus, cela permet une production simplifiée de la dalle plastronique.

Selon un exemple, la face interne de la feuille technique présente sur la deuxième portion de la dalle une couche diffusante configurée pour réfléchir au moins en partie l'au moins un premier faisceau lumineux. Cela permet, tout en réduisant le coût de production d'améliorer la diffusion de la lumière et donc la luminance des pictogrammes de la dalle plastronique.

Selon un exemple, un dispositif adhésif est positionné sur au moins la première portion de la dalle entre la face interne de la feuille de décor et la face interne de la feuille technique de sorte à fixer la feuille de décor à la feuille technique. Cela permet de fixer facilement la feuille de décor à la feuille technique. La production de la dalle plastronique en est alors simplifiée.

Selon un exemple, au moins les composants électroniques, la connectique et l'au moins une première source lumineuse sont connectés à une connectique positionnée sur la face externe de la feuille technique. L'accès à la face externe de la feuille technique selon l'invention permet une meilleur réparabilité des éléments électroniques. Ainsi la production de la dalle plastronique est simplifiée et une réparation de celle-ci plutôt qu'une mise au rebut est possible.

Selon un exemple, la dalle plastronique comprend en outre une coque de protection, la coque de protection étant configurée pour protéger la connectique. Cela permet de protéger les connectiques tout en les laissant accessible si nécessaire, par exemple dans le cadre de composants défectueux à changer, en enlevant la coque de protection.

Selon un exemple, des tests de fonctionnalités (400) peuvent être réalisé après chacune des étapes suivantes :
- la sérigraphie d'au moins une encre décor sur la feuille de décor,
- la sérigraphique de pistes électroniques sur la face externe de la feuille technique,
- le report de composants sur la face externe de la feuille technique,
- le thermoformage de la feuille technique,
- la mise en place de la connectique.

Cela permet de vérifier que chacun des éléments soient fonctionnels à l'installation permettant ainsi une production optimisée.

Selon un exemple, l'assemblage de la feuille de décor et de la feuille technique est réalisé par sertissage. Cela permet un assemblage simplifié de la dalle plastronique.

Selon un exemple, une étape de positionnement d'une coque de protection est réalisée après la mise en place de connectique, la coque de protection étant configurée pour protéger la connectique. Cela permet de façon simplifiée de protéger la connectique tout en gardant la possibilité d'y accéder si des défauts apparaissent au cours du temps. Ainsi, la dalle plastronique peut être réparée plus facilement.

Selon un exemple, une étape de positionnement d'une rondelle de sertissage est réalisée après le positionnement de la coque de protection, la rondelle de sertissage et la coque étant configurées pour coopérer entres elles de sorte à sertir une première partie de la feuille de décor et de la feuille technique. Cela permet ainsi un assemblage rapide et efficace de la dalle plastronique.

Selon un exemple, la feuille de décor et la feuille technique sont positionnées dans une cavité annulaire de la coque de protection lors de l'étape de positionnement de la coque de protection et dans lequel un joint est positionné dans la cavité annulaire avant le positionnement de la feuille de décor et de la feuille technique. Cela permet d'éviter des infiltrations pouvant nuire aux composants électroniques tout en réalisant un assemblage rapide et facile.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

Dans la description qui suit, sauf indication contraire, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", "latéral", etc., il est fait référence à l'orientation des figures correspondantes, étant entendu que, dans la pratique, les dispositifs et assemblages décrits peuvent être orientés différemment.

De même lorsqu'on indique qu'un élément est situé au droit d'un autre élément, cela signifie que ces deux éléments sont situés sur une même ligne perpendiculaire au plan principal dans lequel s'étend principalement une face du substrat, c'est-à-dire sur une même ligne orientée verticalement sur les figures.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat.

Les termes « sensiblement », « environ », « de l'ordre de » signifient « à 10% près, de préférence à 5% près » ou, lorsqu'il s'agit d'une orientation angulaire, « à 10° près ». Ainsi, une direction sensiblement normale à un plan signifie une direction présentant un angle de 90±10° par rapport au plan.

Dans le cadre de la présente invention, un objet ou un matériau « obturateur » signifie que l'objet ou le matériau laisse passer moins de 10% de l'intensité lumineuse du faisceau lumineux, de préférence moins de 5%.

Dans le cadre de la présente invention, un objet ou un matériau « transparent » signifie que l'objet ou le matériau laisse passer au moins 90% de l'intensité lumineuse du faisceau lumineux.

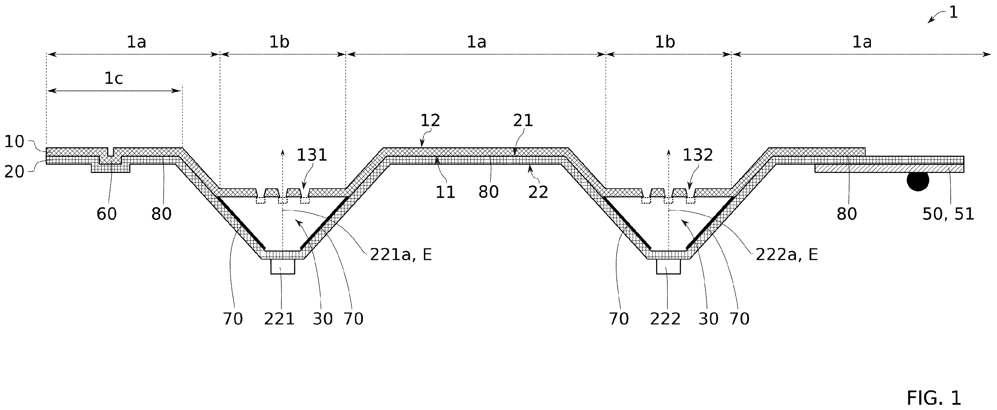

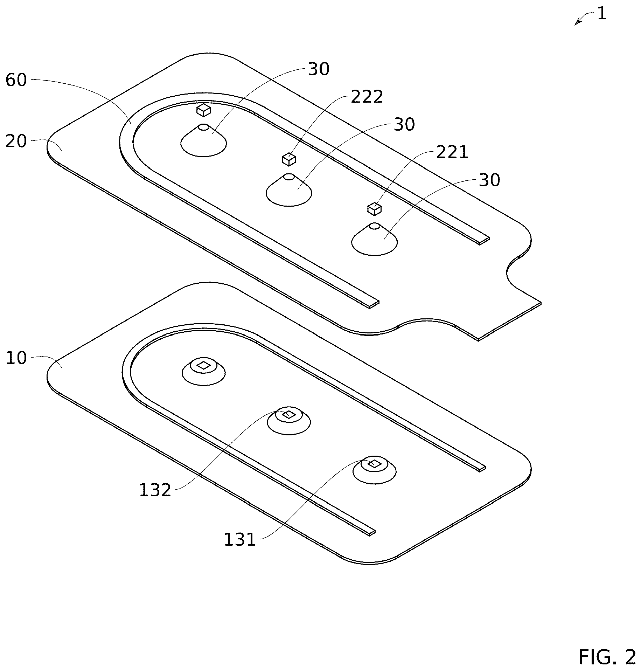

L'invention concerne une dalle plastronique 1. La dalle plastronique va maintenant être décrite en référence aux figures 1 à 4.

La dalle plastronique 1 comprend une feuille de décor 10. La feuille de décor 10 présente une face interne 11 et une face externe 12. La face externe 12 est opposée à la face interne 11. La face externe 12 est configurée pour être la face visible par un utilisateur de la dalle plastronique 1.

La feuille de décor 10 comprend en outre une couche obturatrice présente au moins une première région ouverte 131 constituant un premier pictogramme. De préférence la couche obturatrice présente autant de régions ouvertes, telles que la première région ouverte 131, que l'on souhaite de pictogrammes. Ainsi, tel que présenté dans la figure 1, la feuille décor présente au moins une deuxième région ouverte 132 constituant un deuxième pictogramme. Chacune de ces régions ouvertes 131, 132 peut comprendre une ou plusieurs ouvertures traversantes. Lesdites ouvertures traversantes étant configurées pour traverser la couche obturatrice et constituer un motif sur la face externe 12 pour former un pictogramme.

L'au moins une première région ouverte 131 est configurée pour laisser passer au moins un premier faisceau lumineux 221a. De manière similaire, l'au moins une deuxième région ouverte 132 peut être configurée pour laisser passer au moins un deuxième faisceau lumineux 222a.

La dalle plastronique 1 comprend également une feuille technique 20. La feuille technique 20 peut avantageusement être transparente.

Tout comme la feuille de décor 10, la feuille technique présente une face interne 21 et une face externe 22. La face interne 21 est opposée à la face externe 22. La face interne 21 de la feuille technique 20 est positionnée en regard de la face interne 11 de la feuille de décor 10.

La feuille technique 20 comprend au moins une première source lumineuse 221. L'au moins une première source lumineuse 221 est configurée pour émettre l'au moins un premier faisceau lumineux 221a. L'au moins un premier faisceau lumineux 221a est émis selon une direction d'émission E. Cette direction d'émission E se propage de l'au moins une première source lumineuse 221a à destination de ladite première région ouverte 131 de la feuille de décor 10. De préférence la première source lumineuse 221 est positionnée sur la face externe 22 de la feuille technique 20.

La feuille technique 20 peut, selon un exemple, comprendre au moins une deuxième source lumineuse 222. De manière analogue à la première source lumineuse 221, la deuxième source lumineuse 222 peut être configurée pour émettre l'au moins un deuxième faisceau lumineux 222a. L'au moins un deuxième faisceau lumineux 222a est émis selon une direction d'émission E. Cette direction d'émission E se propage de l'au moins une deuxième source lumineuse 222a à destination de ladite deuxième région ouverte 132 de la feuille de décor 10.

Selon un exemple, la feuille technique 20 comprend ainsi autant de sources lumineuses que la feuille de décor 10 comprend de régions ouvertes.

La feuille de décor 10 et la feuille technique 20 sont avantageusement formées par thermoformage. Ainsi la forme de la feuille de décor 10 et la forme de la feuille technique 20 peuvent être complémentaires.

La feuille de décor 10 et la feuille technique 20 sont également avantageusement assemblées par thermoformage. La feuille de décor 10 et la feuille technique 20 peuvent par exemple, présenter une zone de sertissage 60. La zone de sertissage 60 est avantageusement réalisée par thermoformage. La zone de sertissage 60 permet alors d'assembler la feuille de décor 10 avec la feuille technique 20 par sertissage.

La dalle plastronique 1 présente une première portion 1a et une deuxième portion 1b. La dalle plastronique 1 peut présenter plusieurs premières portions 1a et plusieurs deuxièmes portions 1b tel que représenté en figure 1.

Au niveau de chaque première portion 1a, la face interne 11 de la feuille de décor 10 et la face interne 21 de la feuille technique 20 sont en contact. Plus précisément, la feuille de décor 10 est en contact direct et assemblée avec la face interne 21 de la feuille technique 20.

Sur au moins la deuxième portion 1b de la dalle plastronique 1, la dalle plastronique 1 présente au moins une cavité 30. L'au moins une cavité 30 s'étend alors entre la première source lumineuse 221 et la première région ouverte 131 de la feuille de décor 10.

Selon un exemple, tel que représenté en figure 1, la dalle plastronique 1 comprend au moins une deuxième source lumineuse 222 et une deuxième région ouverte 132, ainsi la dalle plastronique 1 comprend une autre cavité 30 s'étendant entre la deuxième source lumineuse 222 et la deuxième région ouverte 131 de la feuille de décor.

Ainsi, la dalle plastronique 1, peut comprendre autant de cavités qu'elle comprend de sources lumineuses et de région ouverte.

L'au moins une cavité 30 comprend un volume. Le volume de la cavité peut être rempli par un gaz. De préférence le gaz présent dans la cavité 30 est de l'air. La cavité 30 permet ainsi une diffusion directe d'un faisceau lumineux entre la feuille technique et la feuille de décor. Contrairement à l'art antérieur où la résine pouvait influencer sur la diffusion de la lumière et donc influencer la qualité de luminance d'un pictogramme, la cavité 30 et la conception sans résine de la dalle plastronique 1 permettent ici une diffusion directe de la lumière. Le volume de la cavité 30 peut également être rempli par un polymère. L'indice optique du polymère peut alors être proche de l'indice optique de la feuille de décor 10 et de la feuille technique 20. Cela permet ainsi de limiter les sauts d'indices et donc améliorer la transmission du faisceau lumineux. On entend par indice proche un indice présentant un écart de plus ou moins 0,1 par rapport à l'indice optique de la feuille de décor 10 et de la feuille technique 20.

L'au moins une cavité 30 peut présenter une forme conique ou une forme parabolique tronquée. La région du sommet de la forme conique ou parabolique ainsi que les parois sont formées par au moins une partie de la face interne 21 de la feuille technique 20. La base de la forme conique peut être, elle, formée par au moins une partie de la face interne 11 de la feuille de décor 10. La cavité 30 présente ainsi une forme permettant une bonne diffusion de la lumière provenant de l'au moins une première source lumineuse 221.

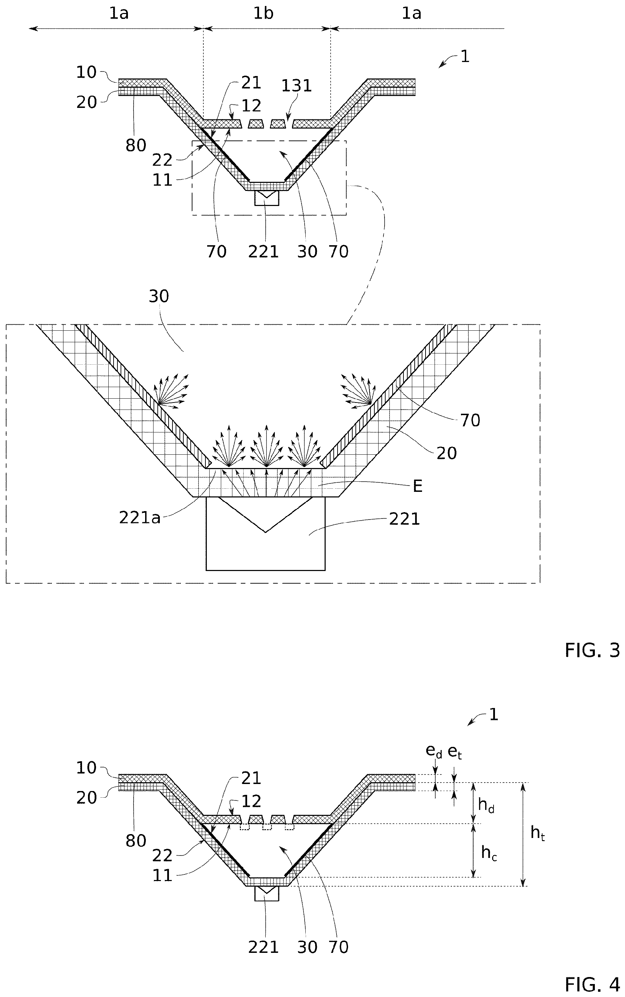

En effet, l'au moins une première source lumineuse 221 peut être positionnée dans une région ouverte de la feuille technique 20. L'au moins une première source lumineuse 221 peut alors être positionnée sur la face externe 22 de la feuille technique 20. Cela permet ainsi un accès facile à la source lumineuse 221. Cette dite source lumineuse 221 peut alors être remplacée si nécessaire. Plus précisément, l'au moins une première source lumineuse 221 peut être positionnée de sorte à émettre au moins un premier faisceau lumineux 221a à partir de la région de sommet de l'au moins une cavité 30. La lumière est ainsi diffusée facilement dans la cavité 30. La source lumineuse est ainsi positionnée de sorte à être à la fois facile d'accès et de sorte à permettre une diffusion de la lumière optimale tel qu'illustré à la figure 3.

Selon un exemple, la forme conique de la cavité 30 présente une hauteur h_{c}. La hauteur de cavité h_{c} est configurée de sorte à permettre une bonne diffusion de la lumière provenant de l'au moins une première source lumineuse 221. La hauteur de cavité h_{c} est comprise entre 1 mm et 10 mm. De préférence elle est comprise entre 2 mm et 5 mm.

La hauteur de cavité h_{c} peut être déterminée suite au thermoformage des feuilles de décor 10 et technique 20. En effet, lors du thermoformage, la feuille de décor 10 peut présenter au niveau de la deuxième portion 1b un renfoncement. L'au moins une première région ouverte 131 peut être positionné dans ce renfoncement. Le renfoncement de la feuille de décor 10 peut présenter une hauteur h_{d}. De manière analogue, la feuille technique 20 peut présenter un renfoncement sur la deuxième portion 1b d'une hauteur hₜ. La différence entre la hauteur hₜ du renfoncement de la feuille technique 20 avec la hauteur h_{d} du renfoncement de la feuille de décor est égale à la hauteur de la cavité h_{c}. Ces dimensions sont illustrées à la figure 4. Ainsi, la hauteur h_{d} du renfoncement de la feuille de décor 10 peut être comprise entre 0 mm et 2 mm. Ainsi, la hauteur hₜ du renfoncement de la feuille technique 20 peut être compris entre 1 mm et 12 mm.

Selon un exemple, les parois de la forme conique de la cavité 30 présentent un angle d'inclinaison a par rapport à un axe horizontal dans lequel peut s'étendre la dalle plastronique 1. Cet angle d'inclinaison a peut être compris entre 100° et 160 °, de préférence entre 110° et 130°. L'angle d'inclinaison a permet ainsi une diffusion optimale de la lumière dans la cavité 30.

Les parois de la forme conique de l'au moins une cavité 30 peuvent également présenter une couche diffusante 70. Plus précisément, la face interne 21 de la feuille technique 20 peut présenter sur la deuxième portion 1b de la dalle 1 la couche réfléchissante et diffusante 70. La couche diffusante 70 est alors configurée pour réfléchir au moins en partie l'au moins un premier faisceau lumineux 221a. Ainsi, chaque cavité 30 de la dalle 1 peut présenter la couche diffusante 70. Cela permet ainsi de d'améliorer encore la bonne diffusion de la lumière jusqu'à l'au moins une première région ouverte 131 tel qu'illustré en figure 3. Ainsi, la dalle plastronique 1 est simplifiée tout en permettant une bonne luminance des pictogrammes de celle-ci.

Comme explicité précédemment, la feuille de décor 10 et la feuille technique 20 peuvent par exemple être assemblées au niveau d'une zone de sertissage 60. La feuille de décor 10 et la feuille technique 20 peuvent également et/ou additionnellement être assemblées par collage. Plus précisément, un dispositif adhésif 80 peut être positionné entre la face interne 11 de la feuille de décor 10 et la face interne 21 de la feuille technique 10. Le dispositif adhésif 80 peut alors être positionné sur la première portion 1a de la dalle 1. Cela permet ainsi de solidariser simplement la feuille de décor 10 à la feuille technique 20. Additionnellement, ce dispositif adhésif 80 peut être réversible permettant si nécessaire de désolidariser la feuille de décor 10 de la feuille technique 10.

La dalle plastronique 1 peut comprendre additionnellement des composants électroniques 51 et une connectique 50. Les composants électroniques 51 et la connectique 50 sont, selon un exemple, positionnés sur la face externe 22 de la feuille technique 20. Le placement sur la face externe 22 de la feuille technique 20 des composants électroniques 51 et de la connectique 50 permet d'accéder facilement à ces composants dans le but de les remplacer, jeter, ou déconnecter si nécessaire. De plus, ce positionnement permet un accès et une mise en position facile des composants 51 et de la carte 51. La connectique 50 permet de relier des pistes conductrices de la feuille technique 20 à une carte de pilotage, par l'intermédiaire d'une nappe par exemple.

Selon un exemple, au moins les composants électroniques 51, la connectique 50 et l'au moins une première source lumineuse 221a sont connectés à une connectique positionnée sur la face externe 22 de la feuille technique 20. Ainsi la première source lumineuse 221a peut être par exemple connectée à la connectique 50. Cela permet ainsi d'avoir tous les connecteurs des composants électroniques accessibles facilement si un défaut est observé et permet donc un remplacement des composants.

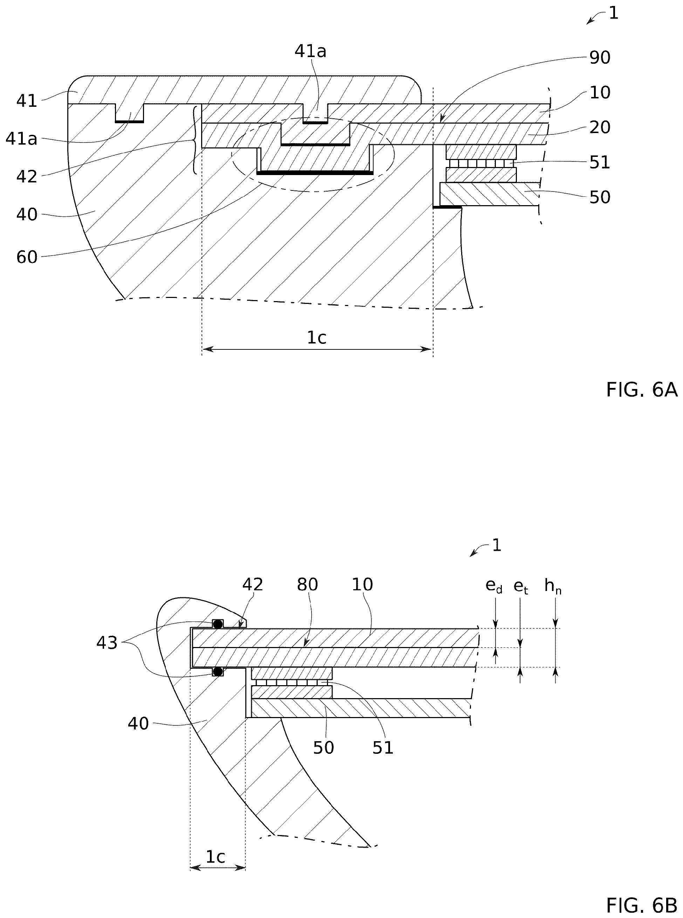

La dalle plastronique 1 peut comprendre en outre une coque de protection 40 tel qu'illustré aux figures 6A et 6B. La coque de protection 40 peut être configurée pour protéger la connectique. Plus précisément, la coque de protection 40 peut être configurée pour protéger au moins en partie la face externe 22 de la feuille technique 20. Ainsi les composants électroniques sont protégés des éléments extérieurs.

La coque de protection 40 peut comprendre une cavité annulaire 42. La cavité annulaire 42 est, selon un exemple, configurée pour permettre l'insertion d'une première partie 1c de la feuille de décor 10 et de la feuille technique 20. Plus précisément, la cavité annulaire 42 permet l'insertion d'une première partie 1c correspondant à la zone de sertissage 60 de la feuille de décor 10 et de la feuille technique 20 assemblée par thermoformage. La première partie 1c peut également correspondre à au moins une partie de la première portion 1a de la dalle plastronique 1.

Selon un exemple, illustré en figure 6B, la cavité annulaire 42 est une gorge dans la coque de protection 42. La cavité annulaire 42 peut présenter une hauteur hₙ correspondant à la somme d'une épaisseur e_{d} de la feuille de décor 10 et d'une épaisseur et de la feuille technique 20. La cavité annulaire 42 peut alors présenter au moins un joint 43. Le joint 43 peut alors être un joint torique. Le joint permet ainsi d'assurer l'étanchéité et le maintien de la feuille de décor 10 et de la feuille technique 10 dans la coque de protection 40. L'épaisseur e_{d} de la feuille de décor 10 est selon un exemple, comprise entre 125 µm (micromètres) et 500 µm. L'épaisseur et de la feuille technique 20 peut, selon un exemple, être comprise entre 250 µm et 1 mm (millimètre).

Selon un exemple, illustré en figure 6A, la cavité annulaire 42 est formée d'un côté par la coque de protection 40 et de l'autre côté par une rondelle de sertissage 41. La rondelle de sertissage 41 et la coque de protection 40 sont alors configurées pour encapsuler la zone de sertissage 60 par sertissage. Pour ce faire la rondelle de sertissage 41 peut présenter des indentations 41a saillantes hors de la surface inférieure de la rondelle, configurées pour entrer en coopération avec la zone de sertissage 60 et avec une cavité de la coque de protection 40 dans laquelle au moins une indentation peut venir être coincée à force lors d'une étape de sertissage de la rondelle 41 sur la coque 40. Au moins une autre indentation 41a saillante agit comme une mâchoire en regard d'une cavité apte à recevoir les deux feuilles déformées sous l'effet de l'application en force de l'indentation, lors d'une étape de sertissage de 41 sur 40.

Ainsi la rondelle de sertissage 41 permet d'assurer un maintien des deux feuilles 10 et 20 l'une par rapport à l'autre, et également par rapport à la coque de protection 40 de sorte à ce que ladite coque de protection 40 protège la face externe 22 de la feuille technique 20 et de tous les composants électroniques 51 positionnés sur celle-ci.

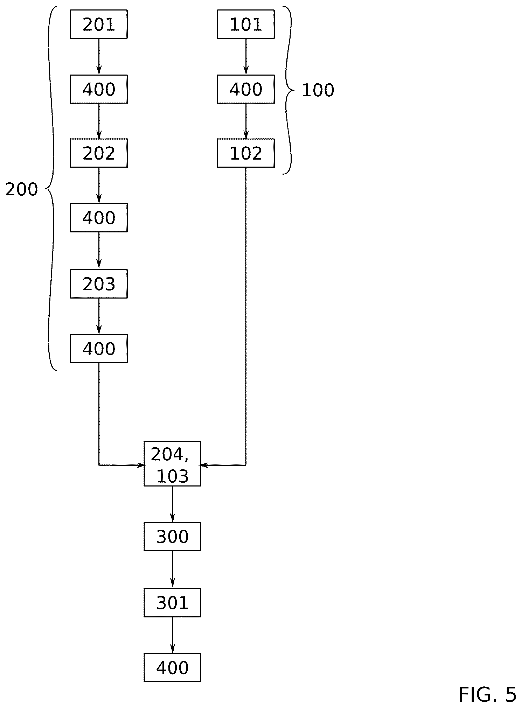

Le procédé d'assemblage d'une dalle plastronique 1 telle que décrite précédemment va maintenant être décrit en référence à la figure 5.

Le procédé d'assemblage comprend une élaboration 100 de la feuille de décor 10. L'élaboration 100 de la feuille de décor 10 comprend en outre, une sérigraphie 101 d'au moins une encre décor de la feuille de décor 10. L'encre décor peut présenter une couche obturatrice. L'élaboration 100 de la feuille de décor 10 comprend également le thermoformage 102 de la feuille de décor 10. Le thermoformage 102 peut permettre de mettre en forme la feuille de décor 10 de sorte à ce que celle-ci présente des zones pouvant définir des pictogrammes. L'élaboration 100 de la feuille de décor 10 se termine par la découpe 103 de la feuille de décor 10. Avantageusement, la découpe 103 est réalisée aux dimensions de la dalle plastronique 1. Les dimensions d'une dalle plastronique 1 dépendant de l'utilisation de la dalle 1.

Le procédé d'assemblage comprend en outre une élaboration 200 de la feuille technique 20. L'élaboration 200 de la feuille technique 20 comprend la sérigraphie 201 de pistes électroniques sur la face externe de la feuille technique 20. L'élaboration 200 de la feuille technique 20 comprend en outre un report 202 de composants électroniques 51 sur la face externe de la feuille technique 20. L'élaboration 200 comprend ensuite le thermoformage 203 de la feuille technique 20. Le thermoformage 203 de la feuille technique 20 est configuré pour former la feuille technique 20, par exemple pour former les cavité 30. Enfin, l'élaboration 200 comprend un découpage 204 de la feuille technique 20. Le découpage 204 de la feuille technique 20 est réalisé aux dimensions de la dalle plastronique 1.

Le procédé d'assemblage comprend ensuite un assemblage 300 de la feuille de décor 10 et de la feuille technique 20. L'assemblage 300 peut, selon un exemple, être réalisé par sertissage. Plus précisément, l'assemblage 300 peut être réalisé au niveau de la zone de sertissage 60. Selon un autre exemple, un dispositif adhésif 80 peut être ajouté sur certaines portion, plus précisément sur l'au moins une première portion 1a de la dalle 1, avant l'assemblage 300 de la feuille de décor 10 et de la feuille technique 20. Selon un autre exemple, l'assemblage 300 peut être réalisé par sertissage et par le dispositif 80 en combinaison.

Le procédé d'assemblage comprend ensuite la mise en place de la connectique 301. La mise en place 301 peut consister à une mise en place 301 sur la face externe 22 de la feuille technique 20. Plus précisément, la mise en place de la connectique 301 peut consister en la mise en place des éléments permettant de connecter les composants électroniques 51, l'au moins une première source 221a et la connectique 50.

Selon un exemple, le procédé peut comprendre des tests de fonctionnalités 400. Les tests de fonctionnalités 400 peuvent être réalisés après chacune des étapes suivantes :
- la sérigraphie 101 d'au moins une encre décor sur la feuille décor 10,
- la sérigraphique 201 de pistes électroniques sur la face externe 22 de la feuille technique 20,
- le report 202 de composants sur la face externe 22 de la feuille technique 20,
- le thermoformage 203 de la feuille technique 20,
- la mise en place 301 de la connectique.

Les tests de fonctionnalités 400 peuvent être des tests de conductivité, de fonctionnalité ou de caractérisation optique.

Le procédé d'assemblage de la dalle 1 peut comprendre une étape de positionnement d'une coque de protection 40. L'étape de positionnement de la coque de protection 40 peut comprendre le positionnement de la coque 40 par rapport aux feuilles de décor 10 et technique 20. L'étape de positionnement de la coque de protection 40 est préférentiellement réalisée après la mise en place 301 de la connectique. En effet la coque de protection 40 permet ainsi de protéger la connectique de l'environnement extérieur.

Selon un exemple, une étape additionnelle de positionnement d'une rondelle de sertissage 41 est réalisée après le positionnement de la coque de protection 40. La rondelle de sertissage 41 est positionnée en contact au moins en partie de la coque 40 et de la face externe 11 de la feuille de décor 10. La rondelle de sertissage 41 et la coque 40 sont alors configurées pour coopérer entres elles de sorte à sertir ensemble une première partie 1c de la feuille de décor 10 et de la feuille technique 20. La rondelle de sertissage 41 et la coque 40 peuvent alors former une cavité annulaire 42 configurée pour accueillir les parties serties ensemble de la feuille de décor 10 et la feuille technique 20 sur leur épaisseur.

Selon un autre exemple, la feuille de décor 10 et la feuille technique 20 sont positionnées dans une cavité annulaire 42 de la coque de protection 40 lors de l'étape de positionnement de la coque de protection 40. Un joint 43 peut alors être positionné dans la cavité annulaire 42 avant le positionnement de la feuille de décor 10 et de la feuille technique 20.

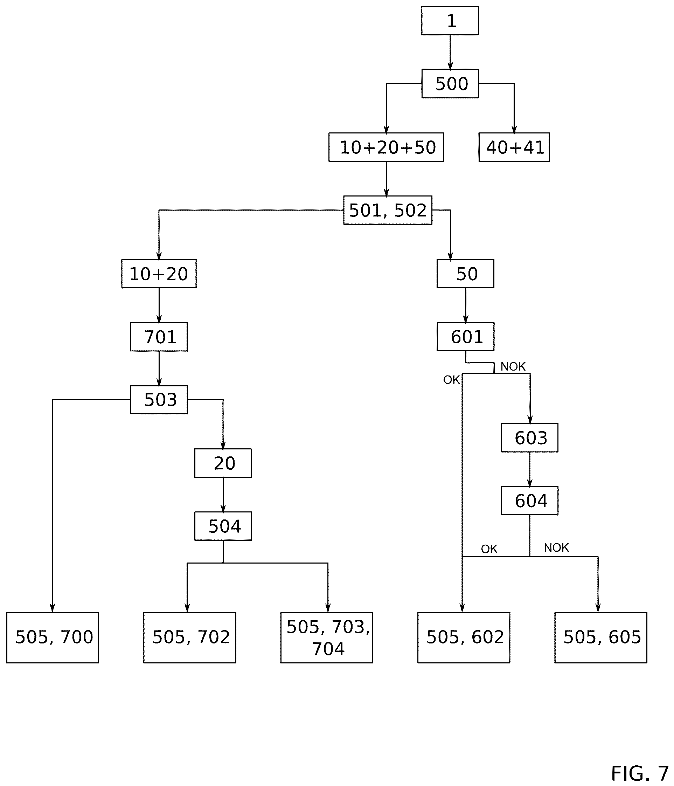

Additionnellement à un procédé d'assemblage, l'invention présente selon un aspect un procédé de maintenance d'une dalle plastronique 1. Le procédé de maintenance va maintenant être d'écrit en référence à la figure 7. Le procédé de maintenance se base sur une pièce finale c'est-à-dire la dalle plastronique 1 assemblée, comprenant la coque de protection 40.

Le procédé de maintenance comprend ainsi une découpe 500 de la feuille de décor 10 et de la feuille technique 20 en dehors de la première partie 1c. La découpe 500 est réalisée de sorte à séparer la coque de protection 40 des autres éléments de la dalle plastronique 1. La découpe 500 peut alors être réalisée au niveau d'une zone de découpe 90 (illustré en figure 6A) qui s'étend verticalement sur les épaisseurs e_{d} et eₜ de la feuille de décor 10 et de la feuille technique 20. La découpe 500 peut être réalisée par laser ou par action mécanique. On entend par action mécanique l'utilisation d'un outil permettant la découpe 500. La coque de protection 40 peut, après la découpe 500 et la séparation des feuilles 10 et 20 de la coque, être recyclée de façon appropriée. Selon un exemple, la coque de protection 40 reste assemblée avec la rondelle de sertissage 41 après cette séparation. La rondelle de sertissage 41 peut alors être ensuite séparée de la coque 40 après la découpe 500. La rondelle de sertissage 41 et la coque de protection 40 peuvent alors être recyclée séparément, même si elles peuvent être avantageusement fabriquée dans la même matière.

Le procédé de maintenance comprend ensuite une déconnexion 501 électrique et une séparation 502 de la connectique 50 de la face externe 22 de la feuille technique 20. Ainsi la connectique 50 peut être séparée des autres éléments présents sur la dalle plastronique 1.

Le procédé de maintenance comprend également un désassemblage 503 de la feuille de décor 10 et de la feuille technique 20. Le désassemblage 503 de la feuille technique 20 et de la feuille de décor 10 peut être réalisé par décollage mécanique. On entend par décollage mécanique une action mécanique tel que la dissolution ou l'écartement mécanique de sorte à défaire les liaisons mécaniques adhésives du dispositif adhésif 80 présent entre la feuille technique 20 et la feuille de décor 10.

Le procédé de maintenance comprend ensuite une récupération 504 des composants électroniques sur la feuille technique 20.

Enfin, le procédé de maintenance comprend une mise au rebut ou une réutilisation 505 séparément de la feuille de décor 10, de la feuille technique 20, des composants électroniques 51, de la connectique 50 et de la coque de protection 40.

Le procédé de maintenance peut comprendre après la séparation 502 de la connectique 50 un premier test de fonctionnalité 601 sur la connectique 50. Le premier test de fonctionnalité est configuré de sorte à déterminer l'étape suivante parmi une réutilisation 602 de la connectique 50 ou une réparation 603 de la connectique 50. Le premier test de fonctionnalité 601 peut alors être configuré pour donner deux réponses OK ou NOK. Dans le cas où la réponse est OK alors cela permet de déterminer que la prochaine étape est la réutilisation 602 de la connectique 50. En effet dans ce cas, la connectique 50 ne présente aucun défaut de fonctionnalité. Dans le cas où la réponse est NOK alors cela permet de déterminer que la prochaine étape est la réparation 603 de la connectique 50. En effet dans ce cas, la connectique 50 peut présenter un défaut de fonctionnalité.

La réparation 603 de la connectique 50 peut comprendre alors le changement de composants de la connectique 50. Une fois la réparation 603 réalisée et donc le changement de composants fait un deuxième test de fonctionnalité 604 peut être réalisé sur la connectique 50. Tout comme le premier test 601, le deuxième test de fonctionnalité 604 permet de déterminer soit la réutilisation 602 de la connectique 50 soit la mise au rebut 605 de la connectique 50. Le deuxième test de fonctionnalité 604 peut alors être configuré pour donner deux réponses OK ou NOK. Dans le cas où la réponse est OK alors cela permet de déterminer que la prochaine étape est la réutilisation 602 de la connectique 50. En effet dans ce cas, la connectique 50 ne présente plus de défaut de fonctionnalité suite à sa réparation 603. Dans le cas où la réponse est NOK alors cela permet de déterminer que la prochaine étape est la mise au rebut 605 de la connectique 50. En effet dans ce cas, la connectique 50 peut présenter un défaut de fonctionnalité non réparable.

Le procédé de maintenance comprend en outre après le désassemblage 503 de la feuille de décor 10 et de la feuille technique 20, une mise au rebut 700 de la feuille de décor. La feuille de décor 10 peut ainsi être recyclée de façon appropriée.

Le procédé de maintenance comprend en outre un troisième test de fonctionnalité 701. Le troisième test de fonctionnalité 701 est réalisé sur les composants électroniques 51 présents sur la face externe 22 de la feuille technique 20 de sorte à déterminer les composants électroniques 51 défectueux et les composants 51 fonctionnels après la déconnexion électrique 501 et la séparation 502 de la connectique 50 de la face externe 22 de la feuille technique 20. L'étape de récupération 504 est alors réalisée après le troisième test de fonctionnalité 701 et après le désassemblage 503 de la feuille technique 20 et de la feuille de décor 10. De ce fait, tous les composants 51 sont récupérés lors de l'étape de récupération 504. Les composants électroniques 51 récupérés 501 sont séparés en deux catégories, le composants fonctionnels et les composants défectueux. Les composants électroniques 51 peuvent être positionnés sur le film technique 20 par collage réversible, ainsi leur récupération 504 peut se faire par décollage.

Le procédé de maintenance peut comprendre, après la récupération 504 des composants électroniques 51, la mise au rebut 702 de la feuille technique 20. Toujours après la récupération 504 des composants électroniques 51, les composants électroniques 51 sont, soit mis au rebut 703 s'ils ont été placés dans la catégorie défectueux suite au troisième test de fonctionnalité 701, soit réutilisés 704 s'ils ont été placés dans la catégorie fonctionnel suite au troisième test de fonctionnalité 701.

L'invention n'est pas limitée aux modes de réalisations précédemment décrits et s'étend à tous les modes de réalisation couverts par l'invention.

### REFERENCES NUMERIQUES

1. Dalle plastronique
1a. première portion
1b. deuxième portion
1c. première partie
10. Feuille de décor
11. Face interne d'une feuille de décor
12. Face externe d'une feuille de décor
131. Première région ouverte
132. deuxième région ouverte
20. Feuille technique
21. Face interne d'une feuille technique
22. Face externe d'une feuille technique
221. Première source lumineuse
221a. premier faisceau lumineux
222. Deuxième source lumineuse
222a. deuxième faisceau lumineux
30. cavité
40 : coque de protection
41 : rondelle de sertissage
41a : indentations
42 : cavité annulaire de coque
43 : joints
50 : connectique
51 : composants électroniques
60 : zone de sertissage
70 : couche diffusante
80 : dispositif adhésif
90 : zone de découpe
100 : élaboration de la feuille de décor
101 : sérigraphie de la feuille de décor
102 : thermoformage de la feuille de décor
103 : découpe de la feuille de décor
200 : élaboration de la feuille technique
201 : sérigraphie de la feuille technique
202 : report des composants électroniques
203 : thermoformage de la feuille technique
204 : découpage de la feuille technique
300 : assemblage de la feuille technique et de la feuille de décor
301 : mise en place de la connectique
400 : tests de fonctionnalité
500 : découpe de la feuille technique et de la feuille de décor
501 : déconnexion électrique
502 : séparation de la connectique de la feuille technique
503 : désassemblage de la feuille technique et de la feuille de décor
504 : récupération des composants électroniques
505 : mise au rebut ou réutilisation
601 : premier test de fonctionnalité
602 : réutilisation de la connectique
603 : réparation de la connectique
604 : deuxième test de fonctionnalité
605 : mise au rebut de la connectique
700 : mise au rebut de la feuille de décor
701 : troisième test de fonctionnalité
702 : mise au rebut de la feuille technique
703 : mise au rebut des composants électroniques défectueux
704 : réutilisation des composants électroniques fonctionnels
E : direction d'émission
e_{d} : épaisseur feuille de décor
et : épaisseur feuille technique
h_{d} : hauteur feuille de décor
hₜ : hauteur feuille technique
h_{c} : hauteur cavité
hₙ : hauteur gorge
a : angle d'inclinaison

## Revendications

1. Dalle plastronique (1) comprenant :
• une feuille de décor (10), présentant une face interne (11) et une face externe, la feuille de décor (10) comprenant une couche obturatrice présentant au moins une première région ouverte (131) constituant un premier pictogramme et configurée pour laisser passer au moins un premier faisceau lumineux (221a),
• une feuille technique (20), présentant une face interne (21) en regard de la face interne (11) de la feuille de décor (10) et en outre présentant une face externe (22), la feuille technique (20) comprenant au moins une première source lumineuse (221), l'au moins une première source lumineuse (221) étant configurée pour émettre, selon une direction d'émission (E), l'au moins un premier faisceau lumineux (221a) à destination de ladite première région ouverte de la feuille de décor,
la feuille de décor (10) et la feuille technique (20) étant formées et assemblées entre elles par thermoformage,
la dalle plastronique (1) étant **caractérisée en ce que** sur au moins sur une première portion (1a) de la dalle, la face interne (11) de la feuille de décor (10) est en contact et assemblée avec la face interne (21) de la feuille technique (20) et **en ce que** sur au moins une deuxième portion (1b) de la dalle, la dalle plastronique (1) présente au moins une cavité (30), l'au moins une cavité (30) s'étendant entre la première source lumineuse, l'au moins une première source lumineuse (221) étant positionnée sur la face externe (22) de la feuille technique (20), et la première région ouverte de la feuille de décor.

2. Dalle plastronique (1) selon la revendication précédente dans laquelle le volume de l'au moins une cavité (30) est remplie par un gaz, de préférence le gaz est de l'air.

3. Dalle plastronique (1) selon l'une quelconque des revendications précédentes dans laquelle l'au moins une première source lumineuse (221) est positionnée dans une région ouverte de la feuille technique.

4. Dalle plastronique (1) selon l'une quelconque des revendications précédentes dans laquelle l'au moins une cavité (30) présente une forme conique ou parabolique dont la région de sommet et les parois sont formées par au moins une partie de la face interne (22) de la feuille technique (20) et dont la base est formée au moins en partie par la face interne (11) de la feuille de décor (10), de préférence l'au moins une première source lumineuse (221) est positionnée de sorte à émettre au moins un premier faisceau lumineux (221a) à partir de la région de sommet de l'au moins une cavité (30).

5. Dalle plastronique (1) selon l'une quelconque des revendications précédentes dans laquelle la dalle plastronique (1) comprend des composants électroniques (51) et une connectique (50), les composants électroniques (51) et la connectique (50) étant positionnés sur la face externe (22) de la feuille technique (20).

6. Dalle plastronique (1) selon l'une quelconque des revendications précédentes dans laquelle la face interne (21) de la feuille technique (20) présente sur la deuxième portion (1b) de la dalle (1) une couche diffusante (70) configurée pour réfléchir au moins en partie l'au moins un premier faisceau lumineux (221a).

7. Dalle plastronique (1) selon l'une quelconques des revendications précédentes dans laquelle un dispositif adhésif (80) est positionné sur au moins la première portion (1a) de la dalle (1) entre la face interne (11) de la feuille de décor (10) et la face interne (21) de la feuille technique (20) de sorte à fixer la feuille de décor (10) à la feuille technique (20).

8. Dalle plastronique (1) selon l'une quelconque des revendications précédentes en combinaison avec la revendication 6 dans laquelle au moins les composants électroniques (51), la connectique (50) et l'au moins une première source lumineuse (221) sont connectés à une connectique positionnée sur la face externe (22) de la feuille technique (20).

9. Dalle plastronique (1) selon l'une quelconque des revendications précédentes dans laquelle la dalle plastronique (1) comprend en outre une coque de protection (40), la coque de protection (40) étant configurée pour protéger la connectique.

10. Procédé d'assemblage d'une dalle plastronique (1) selon l'une quelconque des revendications précédentes dans lequel le procédé comprend :
• une élaboration (100) de la feuille de décor (10), l'élaboration (100) comprenant :
∘ une sérigraphie (101) d'au moins une encre décor sur la feuille de décor (10),
∘ un thermoformage (102) de la feuille de décor (10),
∘ un découpage (103) de la feuille de décor (10) aux dimensions de la dalle plastronique (1),
• une élaboration (200) de la feuille technique (20), l'élaboration (200) comprenant :
∘ une sérigraphique (201) de pistes électroniques sur la face externe de la feuille technique,
∘ un report (202) de composants (51) sur la face externe (22) de la feuille technique (20),
∘ un thermoformage (203) de la feuille technique (20),
∘ un découpage (204) de la feuille technique aux dimensions de la dalle plastronique (1),
le procédé comprenant en outre les étapes suivantes :
• un assemblage (300) de la feuille de décor (10) et de la feuille technique (20),
• une mise en place de connectique (301).

11. Procédé selon la revendication précédente dans lequel des tests de fonctionnalités (400) est réalisé après chacune des étapes suivantes :
• la sérigraphie (101) d'au moins une encre décor sur la feuille de décor (10),
• la sérigraphique (201) de pistes électroniques sur la face externe (22) de la feuille technique (20),
• le report (202) de composants (51) sur la face externe (22) de la feuille technique (20),
• le thermoformage (203) de la feuille technique (20),
• la mise en place de la connectique (301).

12. Procédé selon l'une quelconque des deux revendications précédentes dans lequel l'assemblage (300) de la feuille de décor (10) et de la feuille technique (20) est réalisé par sertissage.

13. Procédé selon l'une quelconque des trois revendications précédentes dans lequel une étape de positionnement d'une coque de protection (40) est réalisée après la mise en place de connectique (301), la coque de protection (40) étant configurée pour protéger la connectique.

14. Procédé selon la revendication précédente dans lequel une étape de positionnement d'une rondelle de sertissage (41) est réalisée après le positionnement de la coque de protection (40), la rondelle de sertissage (41) et la coque (40) étant configurées pour coopérer entres elles de sorte à sertir une première partie (1c) de la feuille de décor (10) et de la feuille technique (20).

15. Procédé selon la revendication 13 dans lequel la feuille de décor (10) et la feuille technique (20) sont positionnées dans une cavité annulaire (42) de la coque de protection (40) lors de l'étape de positionnement de la coque de protection (40) et dans lequel un joint (43) est positionné dans la cavité annulaire (42) avant le positionnement de la feuille de décor (10) et de la feuille technique (20).
